# EUROPEAN PATENT SPECIFICATION

(11) **EP 3 321 016 B1**
(45) Date of publication and mention of the grant of the patent: **15.02.2023**
(21) Application number: 17001861.8
(22) Date of filing: 14.11.2017
(51) Int. Cl.: B23B 31/16, B23B 31/26

(54) **SELF-CENTERING CHUCK**
ZENTRIERKLEMMFUTTER
MANDRIN À CENTRAGE AUTOMATIQUE

(30) Priority: 14.11.2016 IT 201600114863
(43) Date of publication of application: 16.05.2018
(73) Proprietor: TTEngineering S.r.l., 22074 Lomazzo (CO) (IT)
(72) Inventor: Pasquettin, Claudio Antonio, 22074 Lomazzo (CO) (IT)
(74) Representative: Nemni, Raffaelo

(56) References cited:
- EP-A1- 0 554 685
- DE-A1-102015 206 388
- GB-A- 2 018 638
- US-A1- 2014 125 016

## Description

### Object of the invention.

The object of the present invention is to provide a universal self-centering chuck suitable for machining a pipe to be machined with different diameters ranging from 60 to 800 mm and depths ranging from o.2 to 3 mm

A self-centering chuck is a mechanical device very usable for machining a pipe, in particular for cutting or drilling it.

A variety of types of self-centering chucks are known, which are equipped with jaws, usually in a number ranging from 3 to 6.

A drawback of self-centering chucks is in that they cannot be used in automatic lines that have to machine pipes with different diameters, which is particularly true if the various diameters are very close to each other.

According to the known art, machining pipes with different diameters, in particular if they are close to each other, requires a change of the jaws to machine the different diameters. Such replacement is made necessary because the summation of the diameters or their combination might lead to "shadow zones" wherein it was not possible to prevent a travel of the pipe and a corrected machining radius thereof. In other words, the known art is not capable of keeping a pipe round and fixed without replacing the jaws to be suitably selected for the different diameters of the pipe to be machined, should said pipe have the characteristics mentioned above, here below simply referred to as pipe.

Such drawbacks are even more apparent if using pipes of thinner depths. In the case of pipes featuring big diameters and/or very long pipes, considering that pipe stability is very important all over its length, it is necessary that a reliable grip is provided and retained for all diameter/length combinations.

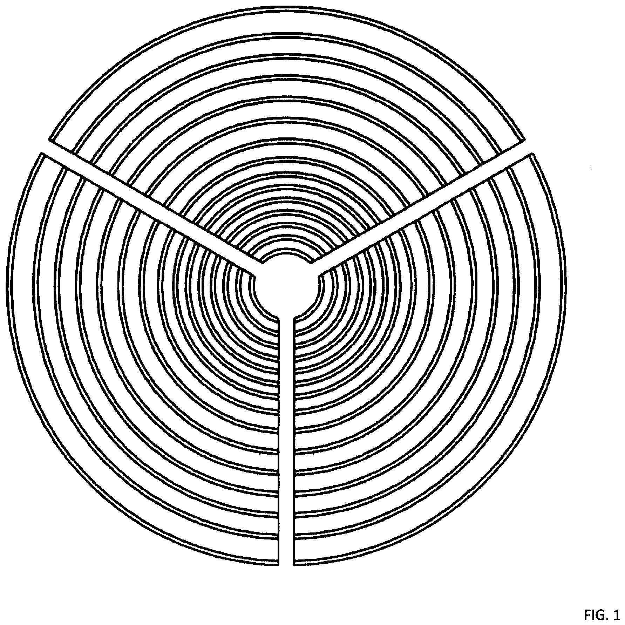

GB2018638 discloses an example of a self-centering chuck (10) provided with at least three jaws (28) for machining a pipe, a driving device (see fig. 1) comprising a motor (19) equipped with a first gear (15) suitable for transmitting the movement to second gears (20) each of which is suitable for radially and in a controlled manner moving its respective jaw (28) wherein the driving device is suitable for receiving electronic signals sent by a CPU programmed by the manufacturer for controlling the motor (19) in order for the jaws (28) to be positioned in such a way that the pipe to be machined can be inserted into the middle part.

Chuck jaws provided with at least three annulus sectors delimited by walls are described for example in document DE102015206388.

### Disclosure of the invention

The drawbacks of the known art are overcome by the present invention as defined in claim 1. Optional advantageous embodiments are defined in the dependent claims. The subject chuck also has advantageous features which will be better explained below.

Said chuck for machining a pipe to be machined is provided with at least three multi-annulus-sector jaws. Each of said jaws is provided with at least three annulus sectors which are delimited by walls. Each annulus sector may feature a minimum distance between the two radii equal to 11 mm.

To be able to machine pipes with different diameters, in particular with diameters close to each other, while avoiding to change the jaws to machine the different diameters, the jaws of the chuck according to the present invention shall be moved.

Such movement is achieved by means of a motor. Said motor moves each individual jaw by way of a first gear suitable for transmitting a movement to a second gear for a radial and controlled movement of each individual jaw. Every jaw is consequently provided with the mentioned first and second gears.

Every second gear moves its respective jaw in a controlled manner being it preferably a screw.

Such jaw driving devices are suitable for receiving electronic signals to control said motor. Said electronic signals are sent by a CPU programmed by the manufacturer, which processes the dimensional data entered by the operator to move each individual jaw so that: (a) it is positioned in a way suitable for inserting the pipe to be machined into the middle part of the annulus sectors of each individual jaw identified on the basis of the diameter of the pipe to be machined; (b) at least one wall of every annulus sector of each individual jaw is in contact with the pipe to be machined so as to guarantee the gripping of the pipe itself, thus preventing it from slipping while being machined.

The chuck according to the present invention also includes at least one wall of each individual multi-annulus-sector jaw having a discontinuous shape. Should the pipe to be machined have such a diameter that each individual jaw cannot be freely positioned for inserting the pipe to be machined in the middle part of the annulus sector of each individual jaw, said pipe can be machined in any way by using the chuck according to the present invention thanks to a slidable push rod, which is described here below.

A slidable push-rod is present in the discontinuity section of every wall. Said push rod is driven by a driving device controlled by the mentioned CPU, which receives a driving signal for each individual push rod output with respect to each individual wall, according to the manufacturer's CPU programming. Said driving signal is given by the CPU in the case that the pipe to be machined has such a diameter that each individual jaw is not positionable for the insertion of the pipe to be machined into the middle part of the annulus sector of each individual jaw.

Thanks to the mentioned push rods coming out, the chuck according to the present invention is also capable of advantageously keeping the pipe to be machined round during its machining in the case of pipes having diameters different from those already provided for the above-mentioned jaws.

### Description of the drawings

Figure 1 shows a graphical representation of a chuck for machining a pipe to be machined according to the present invention provided with at least three multi-annulus-sector jaws.

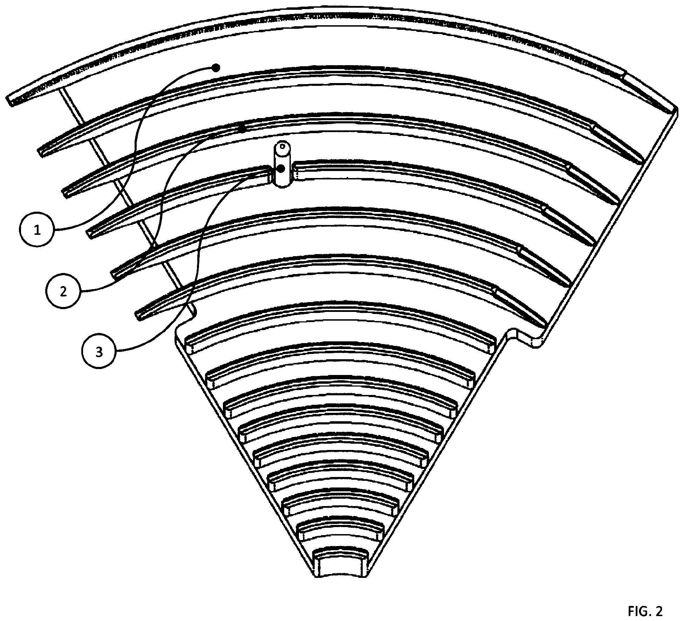

Figure 2 shows a graphical representation of a jaw of said chuck. Said jaw has a number of annulus sectors greater than the minimum value specified for the present invention, namely three annulus sectors. The numeral 1 identifies an annulus sector of the jaw and the numeral 2 identifies one of the walls delimiting said sectors. Figure 2 shows a discontinuous part in which a push rod (3) slidable in the discontinuous section of said discontinuous part is visible.
   Each annulus sector features a minimum distance between the two radii equal to 11 mm.

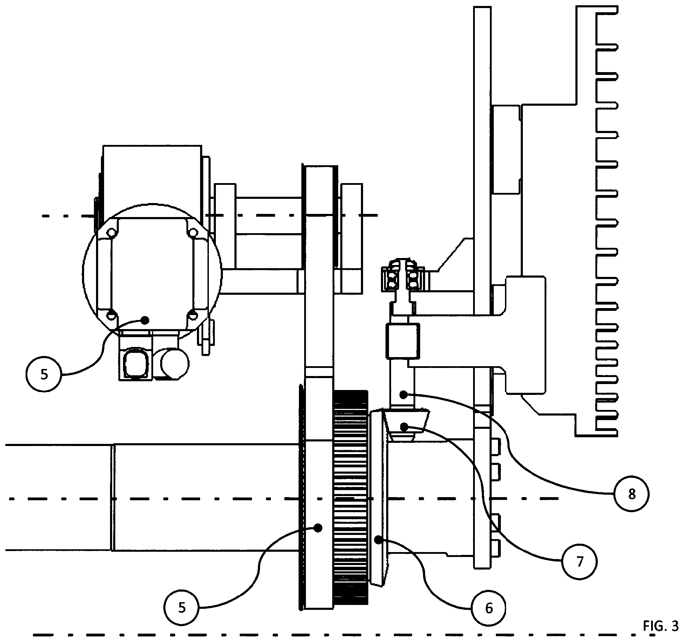

Figure 3 shows a graphical representation of a driving device (4) which comprises a motor (5) for moving the jaws. Said figure 3 also shows a first gear (6) suitable for transmitting the movement to second gears (7) for a radial and controlled movement of the jaw. The present invention includes, for each individual jaw, a first gear (6) and second gears (7) dedicated to moving each individual jaw.

Said second gear moves its respective jaw in a controlled manner, being it preferably a screw (8), not shown.

## Claims

1. A self-centering chuck provided with at least three multi-annulus-sector jaws for machining a pipe to be machined each jaw is provided with at least three annulus sectors (1) delimited by walls (2), a driving device (4) comprising a motor (5) equipped with a first gear (6) suitable for transmitting the movement to second gears (7) each of which is suitable for radially and in a controlled manner moving its respective jaw **characterised in that** the driving device (4) is suitable for receiving electronic signals sent by a CPU programmed by the manufacturer for controlling the motor (5) in order for the jaws to be positioned in such a way that the pipe to be machined can be inserted into the middle part of the most suitable annulus sectors of the jaws on the basis of the diameter of the pipe to be machined wherein at least one discontinuous wall of each individual jaw comprises at least one push rod (3) slidable in the discontinuity section able to machine the pipe having a diameter that each individual jaw is not positionable for the insertion of the pipe to be machined into the middle part of the annulus sector of each individual jaw machining that pipe by means of the mentioned push rods (3) coming out.

2. A self-centering chuck according to claim 1 **characterized in that** the minimum distance between the two radii of each individual annulus sector (1) equals 11 mm.

3. A chuck according to claim 1 **characterized in that** each individual second gear (7) is a screw (8).

4. A chuck according to claim **1 characterized in that** the driving device (4) is suitable for receiving electronic signals sent by a CPU programmed by the manufacturer for controlling the motor (5) in order for at least one wall of each individual annulus sector of each individual jaw to get in contact with the pipe to be machined.

## Patentansprüche

1. Selbstzentrierendes Spannfutter mit mindestens drei Backen mit mehreren Ringsektoren zur Bearbeitung eines zu bearbeitenden Rohres, wobei jede Backe mit mindestens drei Ringsektoren (1) versehen ist, die durch Wände (2) begrenzt sind, eine Antriebsvorrichtung (4), die einen Motor (5) umfasst, der mit einem ersten Zahnrad (6) ausgestattet ist, das geeignet ist, die Bewegung auf zweite Zahnräder (7) zu übertragen, von denen jedes geeignet ist, seine jeweilige Backe radial und in einer gesteuerten Weise zu bewegen, **dadurch gekennzeichnet, dass** die Antriebsvorrichtung (4) geeignet ist, elektronische Signale zu empfangen, die von einer CPU gesendet werden, die vom Hersteller programmiert wird, um den Motor (5) zu steuern, damit die Backen so positioniert werden, dass das zu bearbeitende Rohr in den mittleren Teil mindestens eine unterbrochene Wand jeder einzelnen Backe mindestens eine Schubstange (3) umfasst, die in dem unterbrochenen Abschnitt verschiebbar ist, der in der Lage ist, das Rohr mit einem Durchmesser zu bearbeiten, dass jede einzelne Backe nicht für das Einführen des zu bearbeitenden Rohrs in den mittleren Teil des Ringsektors jeder einzelnen Backe positioniert werden kann, wobei das Rohr mittels der erwähnten Schubstangen (3) bearbeitet wird, die herauskommen.

2. Selbstzentrierendes Spannfutter nach Anspruch 1, **dadurch gekennzeichnet, dass** der Mindestabstand zwischen den beiden Radien jedes einzelnen Ringsektors (1) 11 mm beträgt.

3. Spannfutter nach Anspruch 1, **dadurch gekennzeichnet, dass** jedes einzelne zweite Zahnrad (7) eine Schraube (8) ist.

4. Spannfutter nach Anspruch 1, **dadurch gekennzeichnet, dass** die Antriebsvorrichtung (4) geeignet ist, elektronische Signale zu empfangen, die von einer vom Hersteller programmierten CPU zur Steuerung des Motors (5) gesendet werden, damit mindestens eine Wand jedes einzelnen Ringsektors jeder einzelnen Backe in Kontakt mit dem zu bearbeitenden Rohr kommt.

## Revendications

1. Un mandrin auto-centrant muni d'au moins trois mors à secteurs annulaires multiples pour l'usinage d'un tube à usiner ; chaque mors est muni d'au moins trois secteurs annulaires (1) délimités par des parois (2), un dispositif d'entraînement (4) comprenant un moteur (5) équipé d'un premier engrenage (6) approprié pour transmettre le mouvement à des seconds engrenages (7) dont chacun est approprié pour déplacer radialement et d'une manière contrôlée sa mâchoire respective, **caractérisé en ce que** le dispositif d'entraînement (4) est approprié pour recevoir des signaux électroniques envoyés par une unité centrale programmée par le fabricant pour commander le moteur (5) afin que les mâchoires soient positionnées de telle manière que le tuyau à usiner puisse être inséré dans la partie médiane des secteurs annulaires les plus appropriés des mâchoires sur la base du diamètre du tube à usiner, dans lequel au moins une paroi discontinue de chaque mâchoire individuelle comprend au moins un poussoir (3) pouvant coulisser dans la section discontinue capable d'usiner le tube ayant un diamètre tel que chaque mâchoire individuelle ne peut pas être positionnée pour l'insertion du tube à usiner dans la partie centrale du secteur annulaire de chaque mâchoire individuelle en usinant ce tube au moyen des poussoirs (3) mentionnés qui sortent.

2. Mandrin auto-centrant selon la revendication 1, **caractérisé en ce que** la distance minimale entre les deux rayons de chaque secteur annulaire individuel (1) est égale à 11 mm.

3. Mandrin selon la revendication 1 **caractérisé en ce que** chaque deuxième engrenage individuel (7) est une vis (8).

4. Mandrin selon la revendication 1, **caractérisé en ce que** le dispositif d'entraînement (4) est adapté pour recevoir des signaux électroniques envoyés par une unité centrale programmée par le fabricant pour commander le moteur (5) afin qu'au moins une paroi de chaque secteur annulaire individuel de chaque mâchoire individuelle soit en contact avec le tube à usiner.
